**Europäisches Patentamt**

**European Patent Office**

**Office européen des brevets**

(19)

(11) Veröffentlichungsnummer: **0 025 476**
**B1**

(12) # EUROPÄISCHE PATENTSCHRIFT

(45) Veröffentlichungstag der Patentschrift:
**10.04.85**

(51) Int. Cl.⁴: **G 04 G 15/00**, G 04 G 9/00,
G 09 F 9/00, F 24 C 7/08

(21) Anmeldenummer: **80102597.4**

(22) Anmeldetag: **10.05.80**

(54) **Schaltstellungsanzeige-Vorrichtung für einen Elektroherd.**

(30) Priorität: **15.09.79 DE 2937382**

(43) Veröffentlichungstag der Anmeldung:
**25.03.81 Patentblatt 81/12**

(45) Bekanntmachung des Hinweises auf die Patenterteilung:
**10.04.85 Patentblatt 85/15**

(84) Benannte Vertragsstaaten:
**AT BE CH DE FR GB LI NL**

(56) Entgegenhaltungen:
**DE - A - 2 531 937**
**DE - A - 2 608 683**
**FR - A - 2 415 830**
**GB - A - 989 113**
**US - A - 3 886 539**

(73) Patentinhaber: **Buderus Aktiengesellschaft,
Sophienstrasse 32-34, D-6330 Wetzlar (DE)**

(72) Erfinder: **Weber, Dieter, Peter-Rosegger-Strasse 22,
D-8905 Mering (DE)**
Erfinder: **Meggl, Friedemann, Dr., Lassallestrasse 95,
D-8000 München 50 (DE)**

(74) Vertreter: **Benner, Alwin, Dipl.-Ing., Buderus
Aktiengesellschaft ZA-Patentabteilung Postfach 1220,
D-6330 Wetzlar (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine Schaltstellungsanzeige-Vorrichtung gemäss dem Oberbegriff des Anspruchs 1.

Aus Gründen der Sicherheit ist es bei Elektroherden üblich, optisch sichtbar zu machen, dass der Herd eingeschaltet ist und welche Garstelle (Kochplatten, Backofen) in Betrieb ist. Hierzu bedient man sich beleuchteter Schalterblenden und durchscheinender Schalterknöpfe mit dem Einschaltzustand entsprechenden Markierungen verschiedenster Art.

Elektroherde sind oftmals mit einem Zeitschaltwerk ausgestattet, welches eine Vorwahl der Einschaltdauer und des Einschaltzeitpunktes der zu betreibenden Garstellen ermöglicht. Bei mechanischen Zeitschaltwerken wird an einer Uhr Garbeginn und Gardauer eingestellt. In der gewünschten Zeit schaltet sich dann die betreffende Garstelle selbsttätig ein und wieder aus. Es gibt auch elektronische Zeitschaltwerke. Dabei ist nicht ohne weiteres zu übersehen, in welcher Weise der Herd vorprogrammiert ist.

In der GB-A-989 113 wird eine Schaltstellungsanzeige-Vorrichtung gemäss dem Oberbegriff des Anspruchs 1 beschrieben. Bei dieser Vorrichtung werden aber die Betriebsstunden für die jeweilige Kochstelle nicht zentral am Zeitschaltwerk eingestellt; ausserdem werden die eingestellten Betriebsstunden am Schalter der jeweiligen Kochstelle nicht nur während des eingeschalteten Zustands dieser Kochstelle angezeigt.

Eine Anzeigevorrichtung mit einer Vielzahl von Leuchtdioden als Skala, zeigt die DE-A-2 608 683. Dabei handelt es sich nicht um eine Schaltstellungsanzeige-Vorrichtung für einen Herd, sondern es soll lediglich bei einem Zeitrelais die Zeitablaufverzögerung zusätzlich optoelektronisch sichtbar gemacht werden.

Der Erfindung liegt die Aufgabe zugrunde, einen Elektroherd mit einer Schaltstellungsanzeige-Vorrichtung zu versehen, auf welcher der Betriebszustand übersichtlich und zu jeder Zeit vollständig zu erkennen ist.

Diese Aufgabe wird mit den in Anspruch 1 angegebenen Merkmalen gelöst. Eine Weiterbildung der Erfindung ist in Anspruch 2 angegeben.

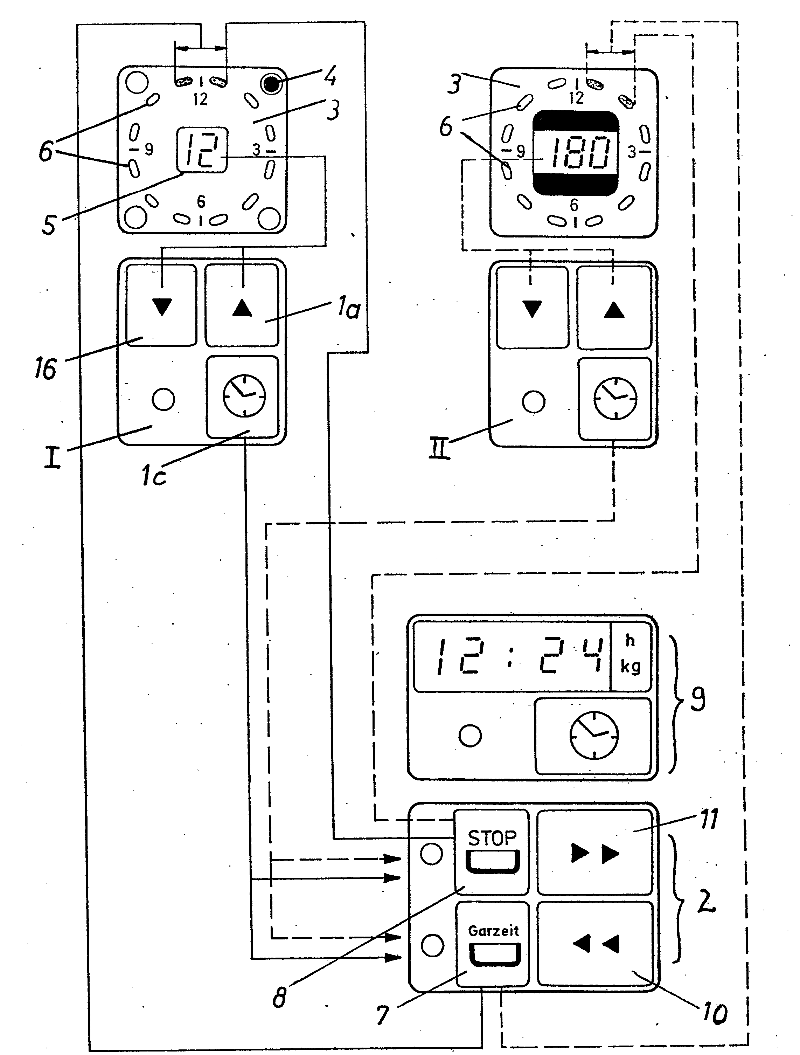

In der Zeichnung ist eine solche Schaltstellungsanzeige-Vorrichtung für einen Elektroherd schematisch dargestellt.

Der Schalter I für eine Kochstelle des Herdes besitzt die Einschalttaste 1a und die Ausschalttaste 1b zur elektronischen Einschaltung der gewünschten Heizleistung sowie die Wahltaste 1c zum Zuschalten des Zeitschaltwerks 2.

Der Backofenschalter II ist in der gleichen Weise aufgebaut. Oberhalb der Schalter I und II ist je ein Anzeigefeld 3 vorgesehen. Dieses hat neben der Kochstellenmarkierung 4 ein Sichtfeld 5, welches die eingeschaltete Heizstufe anzeigt. Um das Sichtfeld 5 herum ist ziffernblattartig ein Kranz von Leuchtfeldern 6 angeordnet, welche von Glimmlampen oder Leuchtdioden gebildet werden. Für je eine Stunde ist ein Leuchtfeld vorgesehen. Die Leuchtfelder 6 sind mit dem Zeitschaltwerk 2 koppelbar. Sobald die Wahltaste 1c gedrückt wird, werden die dem Zeitschaltwerk eingegebenen Daten durch Aufleuchten der zugehörigen Leuchtfelder sichtbar. Die Kochstelle ist im dargestellten Beispiel auf die Heizstufe (12) eingestellt und etwa zwei Stunden lang um die Mittagszeit in Betrieb. Der Backofen ist auf eine Temperatur von 180 °C eingestellt und zwei Stunden von 12 Uhr bis 14 Uhr in Betrieb, wie auf dem Anzeigefeld oberhalb des Backofenschalters II zu erkennen ist. Die elektrischen Verbindungen zum Zeitschaltwerk 2 sind nur symbolisch angedeutet. Sie können auf üblichem Wege hergestellt werden. Das elektronische Zeitschaltwerk hat eine Eingabetaste 7 für die Garzeit und eine Eingabetaste 8 für die Zeit des gewünschten Endes der Garzeit. Die Einstellung der Zeiten selbst, die auf dem darüber angeordneten Bildfeld 9 abzulesen sind, erfolgt über die Ein- und Austaste 10 bzw. 11. Das auf diese Weise dem Zeitschaltwerk 2 eingegebene Zeitprogramm wird durch Drücken der Wahltaste der entsprechenden Garstelle abgerufen und gleichzeitig auf dem zugehörigen Anzeigefeld leicht überschaubar durch das Aufleuchten der entsprechenden Leuchtfelder 6 sichtbar gemacht.

Auf der nicht dargestellten Schalterblende eines Herdes sind selbstverständlich neben den dargestellten Schaltern I und II und den zugehörigen Anzeigefeldern 3 noch die den weiteren Kochstellen entsprechenden Schalter und Anzeigefelder vorgesehen.

## Patentansprüche

1. Schaltstellungsanzeige-Vorrichtung für einen Elektroherd mit einem Zeitschaltwerk (2) zur Vorwahl der Garzeiten, je einem Schalter (I; II) für jede Garstelle sowie mit jeweils einem jedem Schalter zugeordneten, ziffernblattartigen Anzeigefeld (3), das die eingestellte Garzeit sichtbar macht, dadurch gekennzeichnet, dass die Anzeigefelder (3) der Schalter (I; II) für die neben Kochstellen auch einen Backofen umfassenden Garstellen aus dem Bereich je einer Stunde auf dem Ziffernblatt erfassenden, aus Glimmlampen oder Leuchtdioden bestehenden Leuchtfeldern (6) gebildet sind, welche durch Betätigung entsprechender Kontakte (1c) einschaltbar sind und im eingeschalteten Zustand die am Zeitschaltwerk (2) vorgewählten Betriebsstunden am Schalter der in Betrieb befindlichen Garstelle anzeigen.

2. Schaltstellungsanzeige-Vorrichtung nach Anspruch 1, dadurch gekennzeichnet, dass die Anzeigefelder (3) ein Sichtfeld (5) zur Anzeige der eingeschalteten Heizstufe oder gewünschten Temperatur aufweisen.

## Claims

1. A visual indication equipment of the operating position for an electric cooker, comprising a time switch apparatus (2) for the preselection of the cooking times, each including one switch (I; II) for each cooking plate, and each provided with a dial type indicating range (3) allocated to each switch and showing the adjusted cooking time, characterized in that the indicating ranges (3) of the switches (I; II), comprising in addition to the cooking plates, also a baking-oven, are formed of radiant fields (6), each of which comprising the range of one hour on the dial and consisting of low voltage neon-glow lamps or luminous diodes, which can be connected by the actuation of the respective contacts (1c), and indicate in the connected state the working hours preselected on the time switch apparatus (2) on the switch of the cooking plate in operation.

2. A visual indicating equipment according to the Claim 1, characterized in that the indicating ranges (3) comprise a visual field (5) for indicating the connected heating step or the required temperature.

**Revendications**

1. Equipement indicateur visible de la position de commutation pour une cuisinière électrique, muni d'un appareil à interrupteur horaire (2) pour la présélection des temps de cuisson, un commutateur (I, II) pour chaque réchaud, ainsi qu'avec un champ d'indication (3) alloué à chaque commutateur et similaire à un cadran, faisant visible le temps de cuisson réglé auparavant, caractérisé en ce que les champs d'indication (3) des commutateurs (I; II) pour les réchauds, comprenant outre des plaques de cuisson aussi un four, sont formé de champs lumineux, qui comprennent chaque fois la région d'une heure sur le cadran et consistent de lampes à effluves ou diodes lumineux (8) et peuvent être mis en circuit par la commande de contacts correspondants (1c) et indiquent dans l'état de fonctionnement les heures d'utilisation présélectées dans l'interrupteur horaire (2) sur le commutateur en état d'utilisation.

2. Equipement indicateur visible de la position de commutation conformément à la revendication 1, caractérisé en ce que les champs d'indication (3) comportent un champ de visibilité (5) pour l'indication du plot de chauffage mis en circuit ou de la température désirée.

0 025 476

5